# EUROPÄISCHE PATENTSCHRIFT

(11) **EP 0 963 888 B1**
(45) Veröffentlichungstag und Bekanntmachung des Hinweises auf die Patenterteilung: **15.03.2006**
(21) Anmeldenummer: 99109299.0
(22) Anmeldetag: 27.05.1999
(51) Int. Cl.: B60R 22/20, B60J 7/02, F16C 29/02

(54) **Gleitführung für ein Schiebeteil**
Sliding guide for a sliding element
Glissière de guidage pour organe coulissant

(30) Priorität: 04.06.1998 DE 19824933
(43) Veröffentlichungstag der Anmeldung: 15.12.1999
(73) Patentinhaber: Volkswagen Aktiengesellschaft, 38436 Wolfsburg (DE)
(72) Erfinder: Grundmann, Detlef, 38550 Isenbüttel (DE); Kosel, Udo, Dr., 67697 Otterberg (DE)

(56) Entgegenhaltungen:
- DE-A- 3 338 473
- DE-U- 8 307 084
- DE-U- 9 403 967
- FR-A- 2 471 793
- US-A- 3 356 521
- US-A- 5 165 719
- US-A- 5 358 274

## Beschreibung

Die Erfindung betrifft ein Kraftfahrzeug mit einer B- oder C-Säule und einer Gleitführung für ein Schiebeteil, das an seinen Längsrändern in im Wesentlichen U-förmig ausgebildeten Führungsschienen an den beiderseitigen Gleitflächen geführt ist.

Im Bereich einer Öffnung als Verschluss- oder Abdeckteil geführte plattenförmige Schieber oder andere gleitend geführte Schiebeteile werden bekanntlich an ihren Seitenrändern in U-förmig ausgebildeten Führungsschienen gehalten. Um eine leichtgängige Gleitbewegung der Schiebeteile zu erreichen, sind diese zum Teil mit Spiel in den Führungsschienen geführt. Die leichte Beweglichkeit aufgrund ausreichenden Spiels geht jedoch zu Lasten einer ungenauen Führung oder einer unzureichenden Abdichtung oder einer durch die lose Lage bedingten Geräuschbildung, die bei Kraftfahrzeugen durch deren Vibration naturgemäß besonders ausgeprägt ist und auch als extrem störend empfunden wird. Andererseits wird bei zu geringem Spiel aufgrund der Reibung nicht nur die Beweglichkeit des Schiebeteils eingeschränkt, sondern durch das unmittelbare Aufeinandergleiten an den beiderseitigen Gleitflächen können störende Geräusche auftreten.

Beispielsweise werden bei höhenverstellbaren Sicherheitsgurten in Kraftfahrzeugen beim Verstellen der Lage der Gurtumlenkung in der B- oder C-Säule Betätigungsgeräusche verursacht, die durch den von diesem Karosserieteil gebildeten Resonanzraum in verstärktem Maße übertragen werden. Zur Senkung des Schallpegels werden die von Befestigungsschrauben und Rastmitteln durchsetzten Löcher der Befestigungsteile der Höhenverstelleinrichtung mit Schalldämpfungsmaterial ummantelt. Von derartigen Schalldämmungsmaßnahmen sind jedoch die in einer Öffnung der Abdeckung der B-Säule oder C-Säule beweglichen, in Schienen geführten plattenförmigen Schiebeteile, durch deren Gurtöffnung der Sicherheitsgurt in den Fahrzeuginnenraum geführt wird und die mit der Höhenverstelleinrichtung in Verbindung stehen, nicht betroffen. Das heißt, die Bewegung der Schiebeteile verursacht bei einem Klappergeräusche vermeidenden geringen Spiel scharrende oder quietschende Geräusche und ist zudem schwergängig.

Die DE 94 03 967 U1 beschreibt eine Führungsschiene mit einem U-förmigen Profil für Rollladenlamellen. Statt wie bisher üblich die Innenflächen der Führungsschiene mit Flockfasern zu beflocken, ist auf diesen Innenflächen eine Verbundfolie angeordnet, die ein Trägergewebe und eine Gleitschicht oder ein Aramidfasergewebe umfasst.

Der Erfindung liegt daher die Aufgabe zugrunde, eine Gleitführung für Schiebeteile in einer B- oder C-Säule eines Kraftfahrzeugs anzugeben, die eine leichte Beweglichkeit des Schiebeteils zulässt und sowohl im Ruhezustand als in der Bewegung des Schiebeteils geräuscharm ist.

Erfindungsgemäß wird die Aufgabe gelöst, indem bei einem Kraftfahrzeug mit einer B- oder C-Säule und einer Gleitführung für ein Schiebeteil, das an seinen Längsrändern in im Wesentlichen U-förmig ausgebildeten Führungsschienen an den beiderseitigen Gleitflächen geführt ist und das eine im Bereich der Öffnung einer Abdeckung der B- oder C-Säule eines Kraftwagens verschiebbare Platte ist, die mit einer in der B- oder C-Säule angeordneten Höhenverstellvorrichtung für einen Sicherheitsgurt in Verbindung steht, wobei zur schwimmenden Lagerung des Schiebeteils die Gleitfläche der Führungsschiene und die Gleitfläche des Schiebeteils durch eine in einem vorgegebenen freien Querschnitt zwischen den beiden Gleitflächen vorgesehene, an der einen oder der anderen Gleitfläche festgelegte Flockfaserschicht elastisch entkoppelt sind.

Dadurch wird eine Gleitführung mit elastischer Abstützung, d.h. elastischem Spiel des Schiebeteils in den Führungsschienen geschaffen, die ein geräuscharmes und leichtbewegliches Verschieben des Schiebeteils gewährleistet, das insbesondere den Anforderungen an eine komfortable Innenraumgestaltung eines Kraftfahrzeugs gerecht wird. Auch in nicht bewegtem Zustand des Schiebeteils werden - beispielsweise durch Übertragung von Vibrationen - keine Geräusche erzeugt.

Nach einem weiteren wichtigen Merkmal der Erfindung bildet die Flockfaserschicht eine auf den in der Führungsschiene geführten Längsrand des Schiebeteils aufsteckbare sowie mit diesem verklemmbare oder verrastbare, den vorgegebenen Spielraum (freier Querschnitt) zwischen den Gleitflächen ausfüllende Gleitleiste, indem die Flockfaserschicht mit der Außenfläche eines im Wesentlichen U-förmigen Stranges verbunden ist. Die Längsränder des Schiebeteils sind somit allseitig elastisch an den Gleitflächen der Führungsschiene abgestützt.

Gleichermaßen kann die Gleitleiste durch einen an den Innenflächen mit Flockfasern beschichteten U-förmigen Strang gebildet sein. In diesem Fall sind die Gleitleisten in den U-förmigen Führungsschienen verrastbar oder verklemmbar, während die Gleitflächen des Schiebeteils in der diese umschließenden Flockfaserschicht allseitig elastisch gelagert sind.

Weitere Merkmale, zweckmäßige Ausgestaltungen und Vorteile der Erfindung ergeben sich aus den übrigen Unteransprüchen sowie der nachfolgend am Beispiel einer Gurthöhenverstellung für ein Kraftfahrzeug beschriebenen Ausführungsform der Erfindung. Ein Ausführungsbeispiel der Erfindung wird anhand der Zeichnung näher erläutert. Es zeigen:
- Fig. 1: eine Draufsicht auf die Innenseite eines Teils der Abdeckung für die B-Säule der Karosserie eines Personenkraftwagens mit einem im Bereich einer Öffnung der Abdeckung nach oben und unten bewegbaren Schiebeteil; und
- Fig. 2: eine Schnittansicht längs der Linie I-I in Fig. 1 als stark vergrößerte Darstellung des Prinzips der erfindungsgemäßen schwimmenden Lagerung und Führung des Schiebeteils.

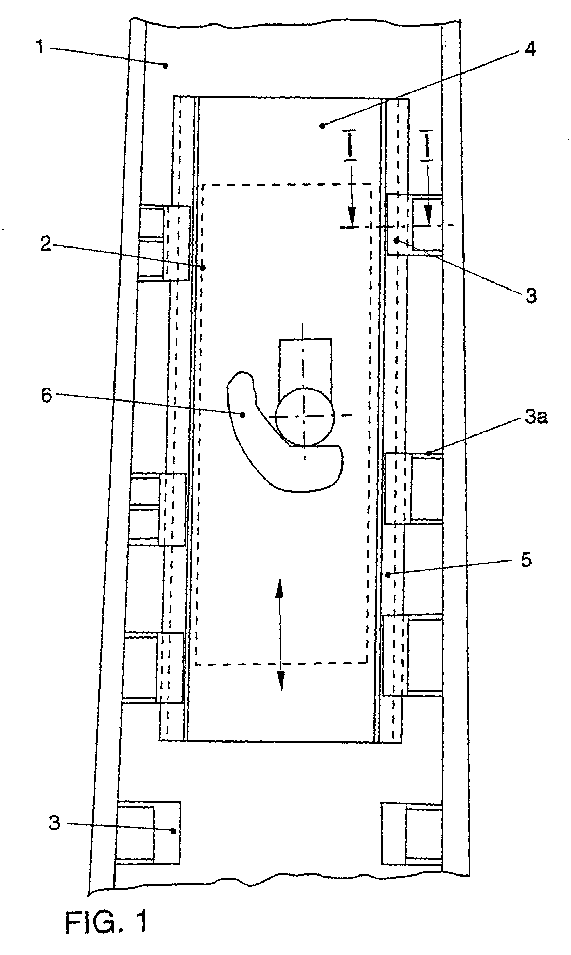

Fig. 1 zeigt die Innenseite einer an einer B-Säule befestigten Abdeckung 1, die eine mit der strichlierten Linie angedeutete langgestreckte Öffnung 2 aufweist. An der Innenfläche der Abdeckung 1 sind entlang der in Längsrichtung verlaufenden Ränder der Öffnung 2 mehrere U-förmige Führungsschienen 3 in Abständen angeformt, die über Befestigungsstege 3a an der Abdeckung 1 angebracht sind und die Führungsschienen somit stabilisieren. In den beidseitig der Öffnung 2 angeordneten Führungsschienen 3 ist ein in Richtung des Pfeils bewegbares, als Platte ausgebildetes Schiebeteil 4 verschiebbar gehalten. In dem Schiebeteil 4 befindet sich eine Gurtöffnung 6 zur Durchführung eines Sicherheitsgurtes (nicht dargestellt). Bei einer Höhenverstellung einer in der B-Säule angebrachten, in der Höhe verstellbaren Gurtumlenkung kann der Sicherheitsgurt aufgrund der mittels des Schiebeteils 4 in der Höhenlage veränderlichen Gurtöffnung 6 der Bewegung der Gurtumlenkung auch in der Abdeckung 1 der B-Säule folgen.

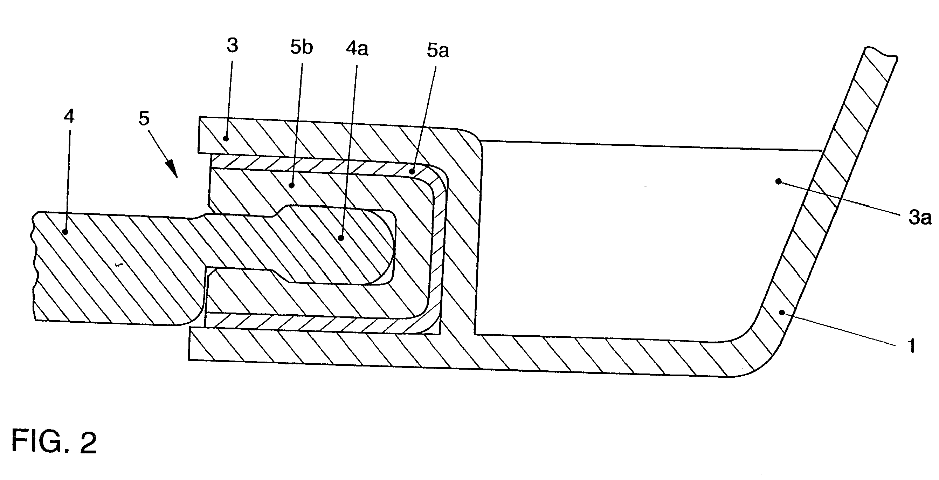

Wie aus Fig. 2 erkennbar ist, verfügt das Schiebeteil 4 an seinen in den U-förmigen Führungsschienen 3 befindlichen Längsrändern über eine wulstartige Erweiterung 4a, auf der jeweils eine U-förmig ausgebildete Gleitleiste 5 gehalten ist. Die Gleitleiste 5 ist im Querschnitt zum einen entsprechend dem Innenprofil der Führungsschiene 3 und zum anderen entsprechend dem wulstartig erweiterten Profil der Längsränder des Schiebeteils 4 ausgebildet, so daß die Gleitleiste 5 den freien Querschnitt zwischen den Innenflächen der Führungsschiene und den Außenflächen der Längsränder des Schiebeteils vollständig ausfüllt. Die an der Innenfläche oder Gleitfäche der Führungsschiene 3 anliegende Außenfläche der Gleitleiste 5 besteht aus einer Flockfaserschicht 5a aus aufgeflocktem textilem Fasermaterial mit guten Gleiteigenschaften und zudem elastischer Wirkung, während der im Wesentlichen starre Teil der Gleitleiste aus einem extrudierten U-förmigen Strang 5b aus Kunststoff mit elastisch beweglichen Schenkeln gebildet ist. Die so ausgebildete Gleitleiste 5 wird jeweils auf die beiden Längsränder (Führungsränder) des Schiebeteils 4 aufgesteckt, d.h. über der wulstartigen Erweiterung 4a federnd verspannt oder verrastet und auf diese Weise formschlüssig und somit ohne Klebemittel am Schiebeteil 4 gehalten. Das Schiebeteil 4 ist durch die elastische Flockfaserschicht 5a von der Gleitfäche der Führungsschiene 3 der Abdeckung 1 elastisch entkoppelt, das heißt, in den Führungsschienen gleichsam schwimmend gelagert , und kann somit reibungs- und geräuscharm leichtgängig bewegt werden.

## Patentansprüche

1. Kraftfahrzeug mit einer B- oder C-Säule und einer Gleitführung für ein Schiebeteil, das an seinen Längsrändern in im Wesentlichen U-förmig ausgebildeten Führungsschienen an den beiderseitigen Gleitflächen geführt ist und das eine im Bereich der Öffnung (2) einer Abdeckung (1) der B- oder C-Säule eines Kraftwagens verschiebbare Platte ist, die mit einer in der B- oder C-Säule angeordneten Höhenverstellvorrichtung für einen Sicherheitsgurt in Verbindung steht, **dadurch gekennzeichnet, dass** zur schwimmenden Lagerung des Schiebeteils (4) die Gleitfläche der Führungsschiene (3) und die Gleitfläche des Schiebeteils (4) durch eine in einem vorgegebenen freien Querschnitt zwischen den beiden Gleitflächen vorgesehene, an der einen oder der anderen Gleitfläche festgelegte Flockfaserschicht (5a) elastisch entkoppelt sind.

2. Kraftfahrzeug nach Anspruch 1, **dadurch gekennzeichnet, dass** die Flockfaserschicht (5a) aus im Wesentlichen senkrecht zur betreffenden Gleitfläche ausgerichteten Flockfasern besteht.

3. Kraftfahrzeug nach Anspruch 1 und 2, **dadurch gekennzeichnet, dass** die Flockfasern in gleicher Länge ausgebildet sind und ihre Länge etwa 0,2 bis 0,4 mm beträgt.

4. Kraftfahrzeug nach einem der Ansprüche 1 bis 3, **dadurch gekennzeichnet, dass** die Flockfasern der Flockfaserschicht (5a) aus einem textilen Material bestehen.

5. Kraftfahrzeug nach einem der Ansprüche 1 bis 4, **dadurch gekennzeichnet, dass** die Flockfaserschicht (5a) mit der Außenfläche eines im Wesentlichen U-förmigen Stranges (5b) verbunden ist und die so gebildete Gleitleiste (5) auf den in der Führungsschiene (3) geführten Längsrand der Schiebeteils (4) aufsteckbar und auf diesem verklemmbar oder verrastbar ist.

6. Kraftfahrzeug nach Anspruch 5, **dadurch gekennzeichnet, dass** der Längsrand des Schiebeteils (4) eine wulstartige Erweiterung (4a) aufweist, an der der dem entsprechend geformte U-förmige Strang (5b) der Gleitleiste (5) verrastbar ist.

7. Kraftfahrzeug nach Anspruch 5 und 6, **dadurch gekennzeichnet, dass** die Schenkel des U-förmigen Stranges (5b) elastisch beweglich sind.

8. Kraftfahrzeug nach einem der Ansprüche 5 bis 7, **dadurch gekennzeichnet, dass** der U-förmige Strang (5b) durch Extrusion aus Kunststoff gebildet ist.

9. Kraftfahrzeug nach einem der Ansprüche 1 bis 4, **dadurch gekennzeichnet, dass** die Flockfaserschicht mit der Innenfläche eines im wesentlichen U-förmigen Stranges verbunden ist und die so gebildete Gleitleiste in der Führungsschiene elastisch verklemmbar oder verrastbar ist, während die Längsränder des Schiebeteils (4) im Innern der Gleitleiste an der Flockfaserschicht elastisch abgestützt sind.

10. Kraftfahrzeug nach mindestens einem der vorhergehenden Ansprüche, **dadurch gekennzeichnet, dass** die an der Gleitfäche der Führungsschiene (3) anliegende Außenfläche der Gleitleiste (5) aus einer Flockfaserschicht (5a) aus aufgeflocktem textilem Fasermaterial besteht und das Schiebeteil (4) durch diese elastische Flockfaserschicht (5a) von der Gleitfäche der Führungsschiene (3) der Abdeckung (1) elastisch entkoppelt ist.

## Claims

1. Motor vehicle with a B- or C-pillar and a sliding guide for a sliding element which is guided at its longitudinal edges in guide rails, of essentially U-shaped design, on the sliding surfaces on both sides and which is a plate which can be displaced in the region of the opening (2) of a covering (1) of the B- or C-pillar of a motor vehicle and is connected to a height-adjusting device, arranged in the B- or C-pillar, for a seatbelt, **characterized in that**, for the floating mounting of the sliding element (4), the sliding surface of the guide rail (3) and the sliding surface of the sliding element (4) are elastically decoupled by a flock fibre layer (5a) which is provided in a predetermined free cross section between the two sliding surfaces and is fixed on the one or the other sliding surface.

2. Motor vehicle according to Claim 1, **characterized in that** the flock fibre layer (5a) consists of flock fibres oriented essentially perpendicularly to the relevant sliding surface.

3. Motor vehicle according to Claim 1 and 2, **characterized in that** the flock fibres are formed in equal length and their length is approximately 0.2 to 0.4 mm.

4. Motor vehicle according to one of Claims 1 to 3, **characterized in that** the flock fibres of the flock fibre layer (5a) consist of a textile material.

5. Motor vehicle according to one of Claims 1 to 4, **characterized in that** the flock fibre layer (5a) is connected to the outer surface of an essentially U-shaped strand (5b), and the sliding strap (5) formed in this manner can be placed onto that longitudinal edge of the sliding element (4) which is guided in the guide rail (3) and can be clamped or latched thereon.

6. Motor vehicle according to Claim 5, **characterized in that** the longitudinal edge of the sliding element (4) has a bead-like widening (4a) on which the correspondingly shaped, U-shaped strand (5b) of the sliding strip (5) can be latched.

7. Motor vehicle according to Claims 5 and 6, **characterized in that** the limbs of the U-shaped strand (5b) are moveable elastically.

8. Motor vehicle according to one of Claims 5 to 7, **characterized in that** the U-shaped strand (5b) is formed from plastic by extrusion.

9. Motor vehicle according to one of Claims 1 to 4, **characterized in that** the flock fibre layer is connected to the inner surface of an essentially U-shaped strand and the sliding strip formed in this manner can be clamped or latched elastically in the guide rail while the longitudinal edges of the sliding element (4) are supported elastically on the flock fibre layer in the interior of the sliding strip.

10. Motor vehicle according to at least one of the preceding claims, **characterized in that** the outer surface of the sliding strip (5), which outer surface bears against the sliding surface of the guide rail (3), comprises a flock fibre layer (5a) of flocked, textile fibre material and the sliding element (4) is elastically decoupled from the sliding surface of the guide rail (3) of the covering (1) by this elastic flock fibre layer (5a).

## Revendications

1. Véhicule automobile comprenant une colonne B ou C et une glissière de guidage pour un organe coulissant, qui est guidé sur ses bords longitudinaux dans des rails de guidage essentiellement en forme de U sur les deux surfaces de glissement des deux côtés et qui est une plaque pouvant coulisser dans la région de l'ouverture (2) d'un recouvrement (1) de la colonne B ou C d'un véhicule automobile, laquelle est en liaison avec un dispositif de réglage en hauteur pour une ceinture de sécurité disposé dans la colonne B ou C, **caractérisé en ce que** pour le montage flottant de l'organe coulissant (3), la surface de glissement du rail de guidage (3) et la surface de glissement de l'organe coulissant (4) sont désaccouplées élastiquement par une couche de fibres en floc (5a) prévue dans une section transversale libre prédéfinie entre les deux surfaces de glissement, fixée sur l'une ou l'autre surface de glissement.

2. Véhicule automobile selon la revendication 1, **caractérisé en ce que** la couche de fibres en floc (5a) se compose de fibres en floc orientées essentiellement perpendiculairement à la surface de glissement concernée.

3. Véhicule automobile selon les revendications 1 et 2, **caractérisé en ce que** les fibres en floc sont réalisées avec la même longueur et leur longueur vaut approximativement 0,2 à 0,4 mm.

4. Véhicule automobile selon l'une quelconque des revendications 1 à 3, **caractérisé en ce que** les fibres en floc de la couche de fibres en floc (5a) se composent d'un matériau textile.

5. Véhicule automobile selon l'une quelconque des revendications 1 à 4, **caractérisé en ce que** la couche de fibres en floc (5a) est connectée à la surface extérieure d'un profilé (5b) essentiellement en forme de U et la barre de glissement ainsi formée (5) peut être enfichée sur le bord longitudinal de l'organe coulissant (4) guidé dans le rail de guidage (3) et être serrée ou encliquetée sur celui-ci.

6. Véhicule automobile selon la revendication 5, **caractérisé en ce que** le bord longitudinal de l'organe coulissant (4) présente un élargissement en forme de bourrelet (4a) sur lequel peut être encliqueté le profilé (5b) en forme de U correspondant de la barre de glissement (5).

7. Véhicule automobile selon les revendications 5 et 6, **caractérisé en ce que** les branches du profilé en forme de U (5b) sont mobiles élastiquement.

8. Véhicule automobile selon l'une quelconque des revendications 5 à 7, **caractérisé en ce que** le profilé en forme de U (5b) est formé par extrusion de plastique.

9. Véhicule automobile selon l'une quelconque des revendications 1 à 4, **caractérisé en ce que** la couche de fibres en floc est connectée à la surface interne d'un profilé essentiellement en forme de U et la barre de glissement ainsi formée peut être serrée ou encliquetée élastiquement dans le rail de guidage tandis que les bords longitudinaux de l'organe coulissant (4) sont supportés élastiquement à l'intérieur de la barre de glissement sur la couche de fibres en floc.

10. Véhicule automobile selon au moins l'une quelconque des revendications précédentes, **caractérisé en ce que** la surface extérieure de la barre de glissement (5) s'appliquant contre la surface de glissement du rail de guidage (3) se compose d'une couche de fibres en floc (5a) en matériau fibreux textile floconné et l'organe coulissant (4) est désaccouplé élastiquement par cette couche de fibres en floc élastique (5a) de la surface de glissement du rail de guidage (3) du recouvrement (1).
